# EUROPÄISCHE PATENTANMELDUNG

(11) **EP 1 647 533 A1**
(43) Veröffentlichungstag der Anmeldung: **19.04.2006**
(21) Anmeldenummer: 04405647.1
(22) Anmeldetag: 15.10.2004
(51) Int. Cl.: C03B 33/03, C03B 33/037, C03B 33/04, B65G 49/06

(54) **Anlage zum Bearbeiten von Glasscheiben**

(71) Anmelder: Bystronic Maschinen AG, CH-4922 Bützberg (CH)
(72) Erfinder: Schenk, Mark, 4600 Olten (CH); Spitteler, Peter, 4443 Wittinsburg (CH)
(74) Vertreter: AMMANN PATENTANWÄLTE AG BERN

(57) **Zusammenfassung**

Die Anlage zum Bearbeiten von Glasscheiben umfasst eine Schneidstation (45), eine Brechstation (46), eine Transportvorrichtung (47), welche eine verfahrbare Auflagefläche (48) zum Transportieren einer Glasscheibe von der Schneid- zur Brechstation enthält, und mindestens einen Positionskörper (60), welcher an der Glasscheibe anbringbar und mit ihr verschiebbar ist. Dabei kann die Auflagefläche Teil eines Förderbandes sein und der Positionskörper als Sauger ausgeführt sein.

## Beschreibung

Die Erfindung bezieht sich auf eine Anlage zum Bearbeiten von Glasscheiben mit einer Schneidstation, einer Transportvorrichtung und einer Brechstation.

Derartige Anlagen dienen dazu, Glasscheiben mit einer bestimmten Form herzustellen, wie sie u.a. in Automobilen verwendet werden. Dazu wird die rohe Glasscheibe auf der Schneidstation mit den gewünschten Ritzlinien versehen, mittels der Transportvorrichtung zur Brechstation transportiert und schliesslich mittels einer Brechvorrichtung, beispielsweise in Form eines verfahrbaren Brechrades, entlang den Ritzlinien gebrochen. Die Glasscheibe befindet sich demnach beim Brechen in einer anderen Position als beim Schneiden, sodass geeignete Massnahmen zu treffen sind, um die Brechvorrichtung in Bezug auf die Ritzlinien richtig positionieren zu können. Es ist auch eine vorsichtige Handhabung der Glasscheibe zu gewährleisten, insbesondere wenn sie auf ihrer Oberseite mit einer empfindlichen Schicht versehen ist.

Aufgabe der vorliegenden Erfindung ist es, eine Anlage zu schaffen, die es auf möglichst einfache Art erlaubt, die Position der Ritzlinien an der Brechstation zu bestimmen, wobei insbesondere ein Berühren der Glasscheibenoberseite zu vermeiden ist.

Diese Aufgabe wird durch die erfindungsgemässe Anlage gemäss Anspruch 1 gelöst. Die weiteren Ansprüche geben bevorzugte Ausführungen an.

Die Erfindung wird im Folgenden anhand eines Ausführungsbeispiels unter Bezugnahme auf Figuren erläutert. Es zeigen:
- Fig. 1: eine perspektivische Ansicht einer erfindungsgemässen Anlage;
- Fig. 2: eine perspektivische Detailansicht der Schneidstation der Anlage gemäss Fig. 1;
- Fig. 3: die Detailansicht gemäss Fig. 2 von der Seite;
- Fig. 4: eine perspektivische Detailansicht der Brechstation der Anlage gemäss Fig. 1;
- Fig. 5: die Detailansicht gemäss Fig. 4 von der Seite; und
- Fig. 6: ein Beispiel einer Glasscheibe in der Position des Schneidens und des Brechens.

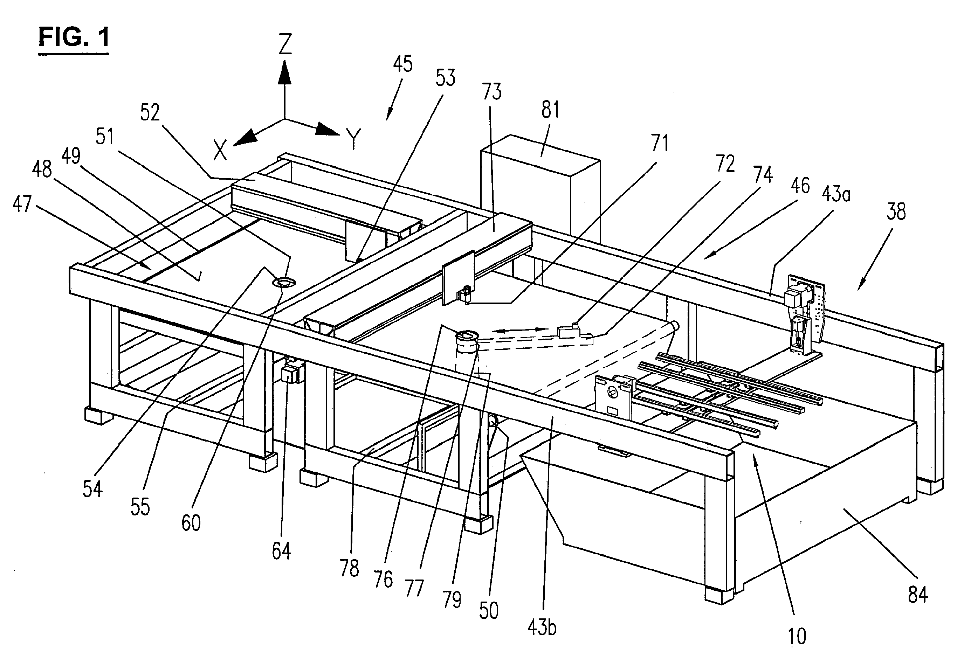

Die in Fig. 1 dargestellte Anlage umfasst eine Schneidstation 45, eine Brechstation 46 und eine Transportvorrichtung 47 mit einer verfahrbaren Auflagefläche 48, auf welcher eine zu bearbeitende Glasscheibe mit ihrer Unterseite aufliegt.

Die Auflagefläche 48 liegt im Wesentlichen in der horizontalen xy-Ebene und ist Teil eines Förderbandes 49, welches endlos ausgebildet und um Umlenkrollen 50 gelegt ist, von denen mindestens eine antreibbar ist. Das Förderband 49 ist vorzugsweise aus einem flexiblen Material, dass so gewählt ist, dass es einerseits ohne grösseres Durchhängen das Gewicht einer Glasscheibe zu tragen und andererseits nachzugeben vermag, wenn der Glasscheibenrand an der Brechstation 46 abgebrochen wird. Die Auflagefläche 48 bzw. das Förderband 49 umfasst mindestens eine Öffnung 51, durch welche hindurch u.a. ein Positionskörper 60 hindurchgeführt und an die Unterseite der Glasscheibe angebracht werden kann. In Fig. 1 ist noch eine weitere Öffnung 76 bei der Brechstation 46 gezeigt, ähnlich der Öffnung 51. Beim Verfahren des Förderbandes 49 verschiebt sich entsprechend die Position der Öffnung 51 bzw. 76. Es ist auch denkbar, nur eine Öffnung 51 oder 76 oder mehrere Öffnungen 51, 76 vorzusehen. Aus Taktzeitgründen ist es besonders vorteilhaft das Förderband mit mehreren Öffnungen 51, 76 zu versehen, welche äquidistant angeordnet sind, wobei der Abstand zwischen zwei benachbarten Öffnungen dem Abstand zwischen der Position der Öffnung 51 und der Position der Öffnung 76 entspricht, wie sie in Fig. 1 gezeigt sind.

Die Schneidstation 45 umfasst eine Schneidbrücke 52, welche oberhalb der Auflagefläche 48 angeordnet ist. Die Schneidbrücke 52 ist in der x-Richtung verfahrbar und mit einem Schneidwerkzeug 53 versehen, welches in y-Richtung und in vertikaler Richtung z verfahrbar sowie um die Achse z drehbar ist. Zum Festhalten der Glasscheibe beim Schneiden umfasst die Schneidstation 45 eine erste Festhalteeinrichtung 54.

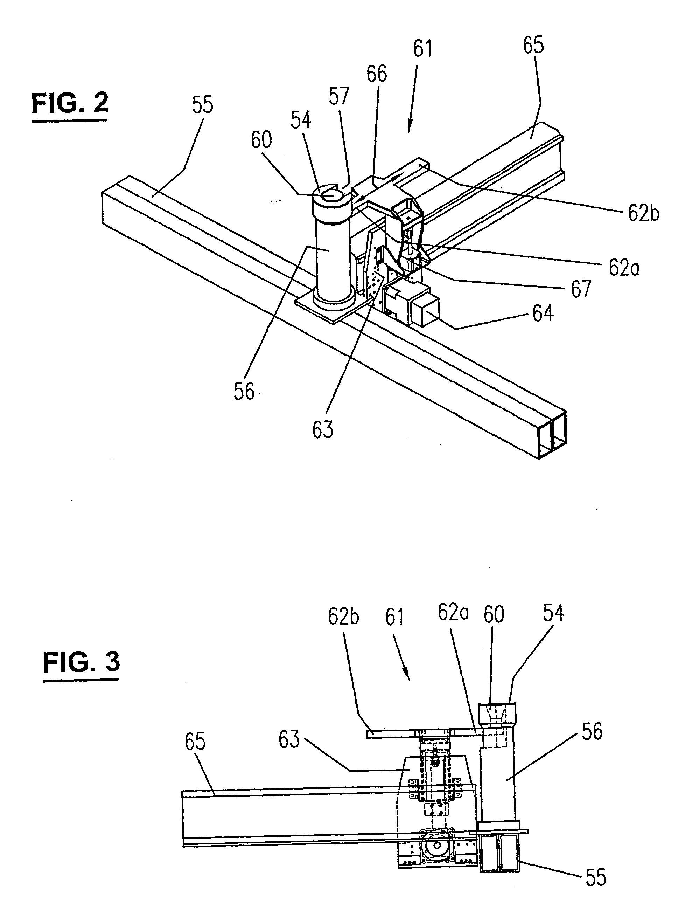

Wie Fig. 2 und 3 zeigen, ist die erste Festhalteeinrichtung als Sauger 54 ausgebildet, welcher in einer an einem Querbalken 55 befestigten Säule 56 angeordnet ist. Der Sauger 54 umfasst eine Ausnehmung 57, welche den Positionskörper 60 aufnehmen kann und welche dazu vorzugsweise einen U-förmigen Querschnitt aufweist. Der Positionskörper 60 ist als Sauger ausgebildet, welcher auf einem Ausleger 61 mit zwei Seitenarmen 62a und 62b angeordnet ist. Der Ausleger 61 ist mit einem Seitenteil 63 verbunden, das einen Antrieb 64 enthält und so geführt durch eine Schiene 65 zwischen Schneidstation 45 und Brechstation 46 verfahrbar ist. Der Positionskörper 60 ist am Ausleger 61 verfahrbar aufgenommen, wie dies in Fig. 2 durch den Doppelpfeil 66 angedeutet und ist so zwischen den Enden des Auslegers 61 hin und her verschiebbar. Das Seitenteil weist einen weiteren Antrieb 67 auf, um den Ausleger 61 zusammen mit dem Positionskörper 60 in der Höhe einzustellen. Der Sauger 54 ist ebenfalls in der vertikalen Richtung z verschiebbar ausgebildet, sodass er zusammen mit dem Positionskörper 60 durch die Öffnung 51 im Förderband 49 hindurch an der Unterseite der Glasscheibe anbringbar ist.

Zurückkommend auf Fig. 1, umfasst die Brechstation 46 eine Brechvorrichtung mit zwei Brechkörpern 71 und 72, die oberhalb bzw. unterhalb der Auflagefläche 49 in der xy-Ebene verfahrbar angeordnet sind. Der erste Brechkörper 71 ist in x-Richtung sowie in vertikaler Richtung verfahrbar an einer Brücke 73 angebracht, welche in y-Richtung verfahrbar ist. Der zweite Brechkörper 72 ist entlang einem rotierbaren Arm 74 verfahrbar angeordnet.

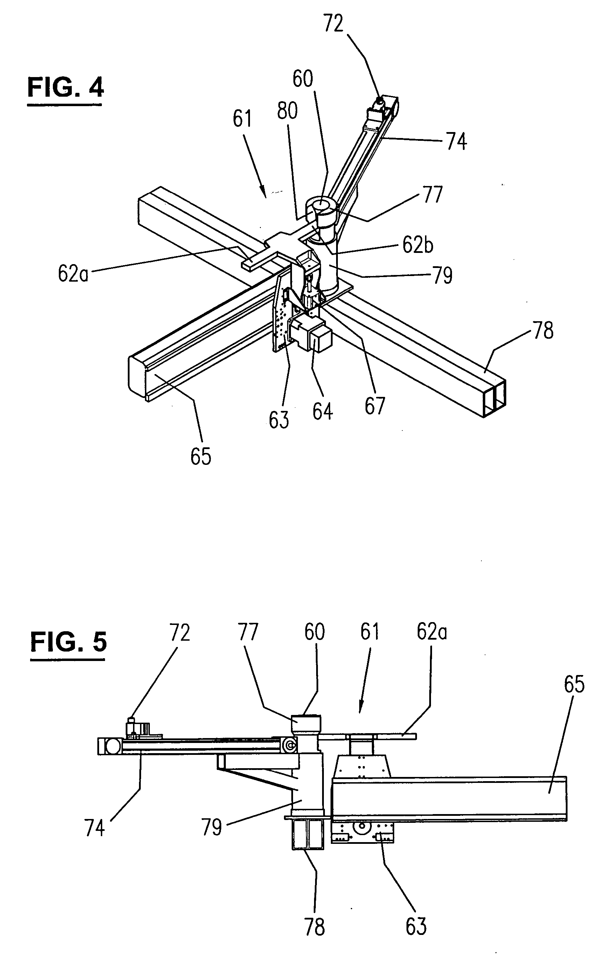

Zum Festhalten der Glasscheibe beim Brechen umfasst die Brechstation 46 eine zweite Festhalteeinrichtung 77. Diese ist in den Fig. 4 und 5 detaillierter dargestellt, wobei Seitenteil 63 und Ausleger 61 ebenfalls eingezeichnet sind und der Positionskörper 60 sich am anderen Seitenarmende 62b des Auslegers 61 befindet. Die zweite Festhalteeinrichtung ist ähnlich der ersten Festhalteeinrichtung 54 aufgebaut und enthält einen Sauger 77, welcher in einer an einem Querbalken 78 befestigten Säule 79 angeordnet ist. Der Sauger 77 umfasst eine Ausnehmung 80, welche den Positionskörper 60 aufnehmen kann und welche dazu vorzugsweise einen U-förmigen Querschnitt aufweist. Der Sauger 77 ist in der vertikalen Richtung z verschiebbar, um ihn durch die Öffnung 76 im Förderband 49 hindurch an der Unterseite der Glasscheibe anbringen zu können.

Die Anlage umfasst weiter Synchronisationsmittel in Form einer Steuerung 81, die dazu dient, ein synchronisiertes Verfahren der Auflagefläche 49 und des Positionskörpers 60 zu gewährleisten. Im Weiteren ist die Steuerung 81 vorzugsweise so ausgestaltet, dass mit ihr auch der Schneidkopf 53 sowie die Brechvorrichtung 71, 72 ansteuerbar sind, um eine Glasscheibe mit Ritzlinien beliebiger Form versehen bzw. den Rand abbrechen zu können.

Anschliessend an die Brechstation 46 sind ein Auffangbehälter 84 zum Sammeln von abgebrochenen Glasscherben und eine Transfervorrichtung 38 angeordnet, welche entlang Trägerbalken 43a, 43b verfahrbar ist und zur Aufnahme und Weitergabe des herausgebrochenen Glasscheibenteils dient. Beispielsweise wird dieser zur weiteren Bearbeitung, wie Schleifen und/oder Bohren, einer anschliessenden Bearbeitungsstation oder zur Zwischenlagerung einem geeigneten Speicher übergeben.

Die Anlage kann wie folgt betrieben werden:

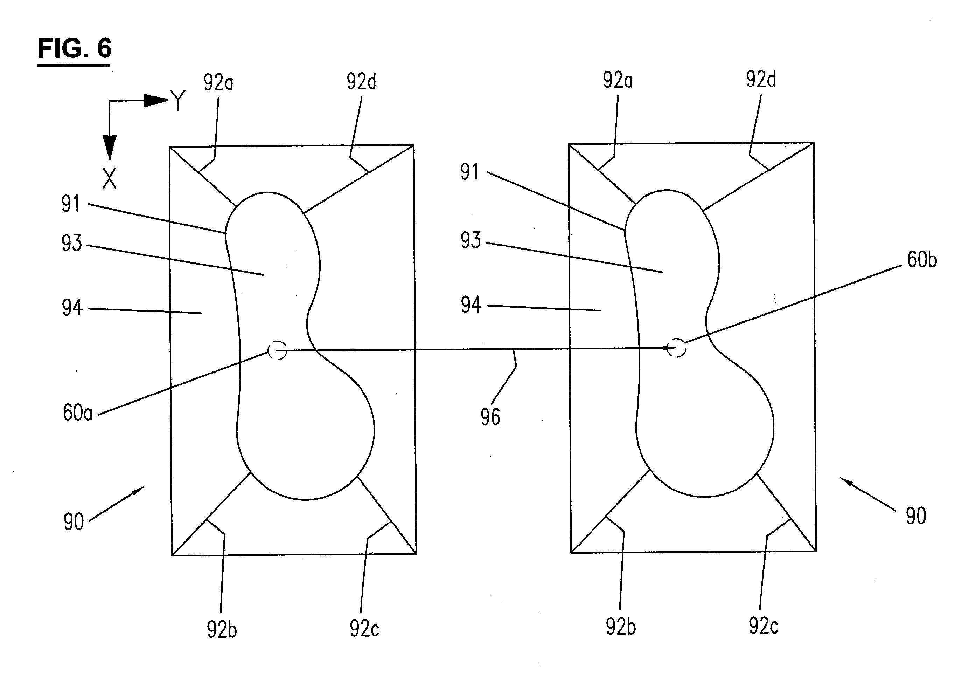

Die rohe Glasscheibe wird auf das Förderband 49 gelegt und der Positionskörper 60 sowie der Sauger 54 werden an der Unterseite der Glasscheibe angebracht. Durch gesteuertes Verfahren des Schneidkopfs 53 wird die Glasscheibe gemäss Vorgabe geritzt, wobei während des Ritzvorganges die Glasscheibe mittels des Saugers 54 und des Positionskörper 60 unverrückbar in ihrer Lage festgehalten wird. Fig. 6 zeigt ein Beispiel einer mit Ritzlinien 91 und 92a-92d versehenen Glasscheibe 90. Die Ritzlinie 41 gibt die gewünschte Kontur vor und trennt den Nutzteil 93 der Glasscheibe 90 vom Randteil 94 (auch Borte genannt), welcher beim Brechvorgang entfernt wird. Die Ritzlinien 92a-92d sind Hilfsritzlinien, die dazu dienen, die Borte 94 in verschiedene Randteile zu unterteilen und so ein sauberes Herausbrechen zu erleichtern.

Die xy-Koordinaten des Positionskörpers 60 in der Anfangsposition, welche in Fig. 6 durch den gestrichelten Kreis 60a angedeutet ist, sind vorgegeben. Durch das Anbringen des Positionskörpers 60 bei der Anfangsposition 60a, wird gewissermassen ein Referenzpunkt auf der Glasscheibe 60 definiert, in Bezug auf welchen die Ritzlinien 91 und 92a-92d angebracht werden.

Mittels der Steuerung 81 werden die Auflagefläche 48 sowie der Positionskörper 60 zusammen mit der daran befestigten Glasscheibe 90 synchron zur Brechstation 46 verfahren. Dabei werden das Seitenteil 63 bis an das Ende der Schiene 65 und der Positionskörper 60 entlang dem Ausleger 61 bis zum Seitenarmende 62b verfahren, sodass der Positionskörper 60 schliesslich in die Ausnehmung 80 des Sauger 77 eingefahren ist. Der Sauger 77 wird anschliessend an die Unterseite der Glasscheibe 90 angebracht.

Die Glasscheibe 90 ist somit, wie in Fig. 6 durch den Pfeil 96 angedeutet, translatorisch verschoben worden, sodass sich nun der Positionskörper 60 in der Endposition 60b befindet. Da die xy-Koordinaten der Endposition 60b vorgegeben sind, sind auch die xy-Koordinaten der Ritzlinien 91 und 92a-92d bekannt, wie sie sich nun an der Brechstation 46 ergeben. Die Brecheinrichtung kann demnach so angesteuert werden, dass die Brechkörper 71 und 72 im Raum richtig positioniert werden, um den Rand 94 der Glasscheibe 90 abbrechen zu können.

Nach dem Brechvorgang wird der Positionskörper 60 von der Glasscheibe 90 gelöst und zurück zur Schneidstation 45 verfahren, währenddessen der Sauger 77 in die Höhe verfahren wird, sodass sich ein Zwischenraum zwischen der Auflagefläche 48 und der Unterseite der Glasscheibe 90 bildet und die Transfervorrichtung 38 dazwischen fahren, den Nutzteil 93 übernehmen und abtransportieren kann. Durch Verfahren des Förderbandes 49 werden die abgebrochenen Glasscherben zum Auffangbehälter 84 hin verschoben, bis sie schliesslich dort hineinfallen. Zur Erzielung einer erhöhten Taktrate wird vorzugsweise noch während des Brechvorgangs die nächste zu bearbeitende Glasscheibe auf das Förderband 49 gelegt und mit dem Schneiden begonnen, sobald der Positionskörper 60 zurück an die Anfangsposition 60a bei der Schneidstation 45 verfahren und an der Glasscheibe angebracht ist.

Die erfindungsgemässe Anlage hat u.a. folgende Vorteile:
- Das Anbringen eines Positionskörpers erlaubt es, einen festen Referenzpunkt auf der Glasscheibe zu definieren. Wird die Glasscheibe verschoben, so bleiben die Koordinaten der Ritzlinien in Bezug auf diesen Referenzpunkt nach wie vor dieselben. Es ist daher nicht erforderlich, die Position der Glasscheibe bei der Brechstation neu zu bestimmen, wodurch die Bearbeitungszeit reduziert werden kann. Im Weiteren sind keine Mittel bzw. Verfahren beispielsweise optischer Art erforderlich, um die Position der Glasscheibe erkennen zu können. Diese Mittel bzw. Verfahren müssten entsprechend aufwändig ausgestaltet sein, da der Rand der rohen Glasscheiben in der Regel jedesmal verschieden ist.
- Die Anlage eignet sich insbesondere zur Verarbeitung von Glasscheiben, deren Oberseite mit einer empfindlichen Schicht versehen ist. Der Positionskörper ist so anbringbar, dass diese empfindliche Schicht unberührt bleibt. Die Anlage eignet sich daher besonders zur Herstellung von Automobilscheiben.

Aus der vorangehenden Beschreibungen sind dem Fachmann zahlreiche Abwandlungen zugänglich, ohne den Schutzbereich der Erfindung zu verlassen, der durch die Ansprüche definiert ist.

So kann die Brechvorrichtung anders ausgestaltet sein, als sie in Fig. 1 dargestellt ist. Möglich ist u.a. die Verwendung eines Brechrades, welches entlang des Glasscheibenrandes geführt wird.

Es ist es auch denkbar, mehrere Positionskörper 60 vorzusehen, die auf der Glasscheibe anbringbar sind.

## Patentansprüche

1. Anlage zum Bearbeiten von Glasscheiben mit einer Schneidstation (45), einer Brechstation (46) und einer Transportvorrichtung (47), welche eine verfahrbare Auflagefläche (48) zum Transportieren einer Glasscheibe von der Schneid- zur Brechstation enthält, **dadurch gekennzeichnet, dass**
die Anlage mindestens einen Positionskörper (60) umfasst, welcher an der Glasscheibe anbringbar und mit ihr verschiebbar ist.

2. Anlage gemäss Anspruch 1, **dadurch gekennzeichnet, dass** die Auflagefläche (48) Teil eines Förderbandes (49) ist, welches vorzugsweise flexibel ist.

3. Anlage gemäss einem der Ansprüche 1 oder 2, **dadurch gekennzeichnet, dass** die Auflagefläche (48) mindestens eine Öffnung (51, 76) zum Durchführen des Positionskörpers (60) aufweist.

4. Anlage gemäss einem der Ansprüche 1 bis 3, **dadurch gekennzeichnet, dass** der Positionskörper (60) mittels lösbarer Verbindung an der Glasscheibe anbringbar ist und vorzugsweise ein Sauger ist.

5. Anlage gemäss einem der Ansprüche 1 bis 4, **dadurch gekennzeichnet, dass** sie Führungsmittel (65) umfasst zum Vorgeben der Richtung (y), in welche der Positionskörper (60) verschiebbar ist.

6. Anlage gemäss einem der Ansprüche 1 bis 5, **dadurch gekennzeichnet, dass** sie Antriebsmittel (64) zum Verfahren des Positionskörpers (60) zwischen der Schneidstation (45) und Brechstation (46) und
vorzugsweise Synchronisationsmittel (81) zum synchronisierten Verfahren der Auflagefläche (49) und des Positionskörpers umfasst.

7. Anlage gemäss einem der Ansprüche 1 bis 6, **dadurch gekennzeichnet, dass** die Schneidstation (45) eine erste Festhalteeinrichtung (54) zum Festhalten der Glasscheibe enthält,
wobei vorzugsweise die Festhalteeinrichtung eine Ausnehmung (57) zur Aufnahme des Positionskörpers (60) und/oder Saugmittel umfasst.

8. Anlage gemäss einem der Ansprüche 1 bis 7, **dadurch gekennzeichnet, dass** die Brechstation (46) eine zweite Festhalteeinrichtung (77) zum Festhalten der Glasscheibe enthält,
wobei vorzugsweise die Festhalteeinrichtung eine Ausnehmung (80) zur Aufnahme des Positionskörpers (60) und/oder Saugmittel umfasst.
